# EUROPÄISCHE PATENTSCHRIFT

(11) **EP 1 262 278 B1**
(45) Veröffentlichungstag und Bekanntmachung des Hinweises auf die Patenterteilung: **26.05.2004**
(21) Anmeldenummer: 02009181.5
(22) Anmeldetag: 25.04.2002
(51) Int. Cl.: B23Q 16/10, B23Q 11/00

(54) **Werkzeugrevolver**
Tool turret
Révolver porte-outil

(30) Priorität: 18.05.2001 DE 10125722
(43) Veröffentlichungstag der Anmeldung: 04.12.2002
(73) Patentinhaber: Sauter Feinmechanik GmbH, D-72555 Metzingen (DE)
(72) Erfinder: Sauter, Reiner, Dipl.-Ing., 72555 Metzingen (DE); Müller, Alfred E., 72555 Metzingen (DE); Sahm, Detlef, Dr.-Ing., 73669 Lichtenwald/Hegenl. (DE); Dieringer, Jochen, Dipl.-Ing., 72379 Hechingen (DE)
(74) Vertreter: Bartels, Martin Erich Arthur

(56) Entgegenhaltungen:
- DE-A- 3 738 551
- DE-A- 19 719 173

## Beschreibung

Die Erfindung betrifft einen Werkzeugrevolver mit einem mit einer Werkzeugmaschine zu verbindenden Gehäuse, mit einem drehbar gelagerten Werkzeugträger für die Aufnahme von Bearbeitungswerkzeugen, und mit einem elektrischen Antrieb, um den Werkzeugträger in die jeweilige Arbeitsstellung für die Bearbeitungswerkzeuge zu verschwenken, wobei der elektrische Antrieb einen Rotor und einen Stator mit Spulenwicklungen aufweist, wobei der Rotor des elektrischen Antriebes mit dem Werkzeugträger in Verbindung steht und der Stator mit Teilen des Gehäuses, wobei die Drehbewegung für den Werkzeugträger getriebelos und direkt durch den elektrischen Antrieb erfolgt und wobei der Rotor den Stator umfaßt.

Durch die DE 199 19 553 C2 ist ein gattungsgemäßer, getriebeloser Werkzeugrevolver bekannt mit einem drehbar gelagerten Werkzeugträger mit mindestens zwei Werkzeugen, der mittels eines elektrischen Schwenkantriebes in die jeweilige Arbeitsstellung für ein Werkzeug verschwenkbar ist, wobei der Werkzeugträger mit einer Hohlwelle drehfest verbunden und über diese Hohlwelle drehbar im Gehäuse des Werkzeugrevolvers gelagert ist. Als Schwenkantrieb dient ein sog. Ringmotor, so daß frei von zusätzlichen, übersetzenden, mechanischen Kraftübertragungselementen der Elektromotor unmittelbar an der Hohlwelle angreifend über diese die Schwenkbewegung für den Werkzeugträger veranlaßt.

Die im Stand der Technik hierfür eingesetzten Ringmotoren sind Elektromotoren mit einer elektrischen Wicklung im Stator, so daß dergestalt Drehmomente auf die Hohlwelle ausgeübt werden können, die drehfest mit dem Werkzeugträger verbunden ist. Der zum Einsatz kommende Ringmotor im Stand der Technik ist in der Art eines Innenläufers ausgebildet, d.h. der mit dem Gehäuse verbundene Stator mit den Spulenteilen umfaßt außenumfangsseitig den Rotor, der als Bestandteil der Hohlwelle mit dem Werkzeugträger in Verbindung steht.

Der bekannte Ringmotor ist dabei im Bereich des einen freien Endes der. Hohlwelle angeordnet, wohingegen an ihrem anderen freien Ende der Werkzeugträger mit seinen Bearbeitungswerkzeugen an ihr drehfest angeordnet ist. Der dahingehende Aufbau nimmt insbesondere auf der Gehäuseseite viel Bauraum ein, so daß ein "schlank" aufbauendes Gehäuse mit der bekannten Lösung nicht erreichbar ist, was die Einbaumöglichkeiten für den bekannten Werkzeugrevolver einschränkt, insbesondere wenn er bei Werkzeugmaschinen zum Einsatz kommen soll, die aufgrund ihrer Größe oder ihrer Ausgestaltung den benötigten Einbauraum gerade nicht zur Verfügung stellen können. Da darüber hinaus der elektrische Antrieb für den Werkzeugträger mit den Bearbeitungswerkzeugen relativ weit von diesem entfernt ist, ist die dahingehende Krafteinleitung für die Antriebsleistung nicht optimal, da die Hohlwelle als Torsionsfeder wirken kann.

Durch die DE 197 19 173 A1 ist gleichfalls ein gattungsgemäßer Werkzeugrevolver entsprechend dem Oberbegriff von Anspruch 1 bekannt mit einer Schalteinrichtung, mit einer Konus-Bremsfläche und einer Stirn-Bremsfläche an einer ersten und einer zweiten axial relativ zueinander bewegbaren Bremsscheibe, wobei die jeweilige Stirn-Bremsfläche von der jeweiligen Konus-Bremsfläche axial so beabstandet ist, daß bei einem Bremsen die Konus-Bremsfläche zunächst zentrierend und bremsend die Bewegung der einen Bremsscheibe herabsetzt, um positionsgenau mit den Stirnbremsflächen den Ruhezustand (Schaltposition) der ersten Bremsscheibe zu halten und festzulegen. Hierdurch wird erreicht, daß die bekannte Schalteinrichtung für den Werkzeug-Revolverkopf sich aus relativ wenigen, einfachen Teilen zusammensetzt, im Betrieb widerstandsfähig und langlebig ist, wobei die Schalteinrichtung von einem Motor mit hohem Drehmoment und niedriger Drehzahl in eine präzise Winkelstellung bewegt werden kann. Bei der bekannten Lösung befindet sich der Ringmotor wieder, wie bei der vorstehend beschriebenen, bekannten Lösung, auf der Gehäuseseite, so daß insbesondere bei beengten Einbauverhältnissen die bekannte Lösung nicht ohne weiteres eingesetzt werden kann.

Durch die DE 37 01 090 A1 ist eine winkelschaltbare Baueinheit für Werkzeugmaschinen bekannt, insbesondere auch für den Einsatz bei Revolverköpfen, wobei die Baueinheit einen stationären Teil und einen um diesen drehbar angeordneten Teil, einen Antriebsmotor, ein Getriebe, eine Arretiereinrichtung sowie eine Signaleinrichtung zum Erfassen der Winkelstellungen des verdrehbaren Teils aufweist, und die Signaleinrichtung ist durch eine Vielzahl von in einem der gegeneinander verdrehbaren Teile eingesetzte stromlose Detektier- oder Codierelemente und einer mit diesen induktiv zusammenwirkenden, in einem anderen Teil angeordneten Decodier- oder Leseeinrichtung gebildet. Durch diese bekannte Ausgestaltung ist es möglich, eine platzorientierte Erkennung der Winkelstellung des verdrehbaren Teils zu bewerkstelligen, ohne daß durch Prellungen ausgelöste Fehlsignale auftreten und ohne daß zusätzlicher Bauraum beansprucht wird. Vielmehr ist eine berührungslose Erkennung der Schaltstellung möglich. Die genannten Bauteile der winkelschaltbaren Baueinheit sind platzsparend stirnseitig an der Werkzeugscheibe bzw. dem Werkzeugträger angeordnet, und zwar im Übergangsbereich zwischen Werkzeugträger und den feststehenden Gehäuseteilen des Werkzeugrevolvers. Aufgrund des beengten Einbauraumes an der genannten Einbaustelle kann nur ein konstruktiv klein aufbauender Elektromotor eingesetzt werden, der verhältnismäßig leistungsschwach ist. Die Übertragung des Antriebsdrehmomentes auf den Werkzeugträger oder die Werkzeugscheibe über das Getriebe verbraucht gleichfalls Antriebsleistung sowie Bauraum und aufgrund der Teilevielzahl ist die bekannte Lösung teuer in der Herstellung und anfällig gegenüber auftretenden Betriebsstörungen.

Ausgehend von diesem Stand der Technik liegt der Erfindung die Aufgabe zugrunde, die bekannten Werkzeugrevolver unter Beibehalten ihrer Vorteile derart weiter zu verbessern, daß nur wenig Bauraum auf seiten der Werkzeugmaschine benötigt wird zum Festlegen des Werkzeugrevolvers, daß eine höhere Leistung für den elektrischen Antrieb erreichbar ist und daß die höhere Antriebsleistung dergestalt an den Werkzeugträger weitergegeben wird, daß im wesentlichen eine verdrehsteife Bearbeitung mit den Werkzeugen erreichbar ist. Eine dahingehende Aufgabe löst ein Werkzeugrevolver mit den Merkmalen des Patentanspruches 1 in seiner Gesamtheit.

Dadurch, daß gemäß dem kennzeichnenden Teil des Patentanspruches 1 sowohl der Rotor als auch der Stator von dem Werkzeugträger umgriffen sind und daß der Rotor außenumfangsseitig in direkter Anlage mit dem Werkzeugträger ist und dergestalt zur Übertragung eines Drehmomentes mit dem Werkzeugträger fest verbunden ist, ist durch die genannte Rotor-Stator-Anordnung ein sog. Außenläufer für den elektrischen Antrieb realisiert, bei dem der Rotor außen mit dem Werkzeugträger umläuft und der Stator innen am Gehäuse angeordnet ist. Da der dahingehende Außenläufer im Werkzeugträger selbst vollständig integriert ist, wo mehr Einbauraum zur Verfügung steht, läßt sich ein wesentlich stärkeres Antriebskonzept realisieren gegenüber den bekannten Lösungen, bei der der Innenläufer die im Durchmesser kleinere Hohlwelle für den Antrieb des Werkzeugträgers zu umfassen hat, so daß dergestalt weniger Wicklungsraum für das Antriebskonzept zur Verfügung steht. Durch die Integrierung des Außenläufers in den Werkzeugträger wird die Antriebsleistung unmittelbar an diesen abgegeben, ohne Einsatz eines Übertragungsgetriebes. Da das in den Werkzeugträger hinein verlegte Antriebskonzept keinen Einbauraum auf der eigentlichen Gehäuseseite des Werkzeugrevolvers benötigt, ist demgemäß ein "schlank" aufbauender Werkzeugrevolver auf seiner Gehäuseseite realisiert, so daß er wenig Einbauraum an einer Werkzeugmaschine benötigt. Insbesondere bei kleineren Werkzeugmaschinen oder bei solchen, die im Hinblick auf die Bearbeitungssituation über wenig Einbauraum verfügen, ist es mit dem erfindungsgemäßen Werkzeugrevolverkonzept erst möglich, elektrische Antriebskonzepte zum Verschwenken der Werkzeugscheibe erfolgreich einzusetzen.

Da darüber hinaus der erfindungsgemäße Werkzeugrevolver über keine antreibbare Hohlwelle verfügt, ist die Teilevielzahl reduziert, was zum einen die Herstellkosten senkt und aufgrund der geringeren Anzahl an Teilen ist auch zum anderen die Möglichkeit für Verschleiß verringert, was zu erhöhten Standzeiten für den Werkzeugrevolver führt. Als besonders vorteilhaft hat es sich erwiesen, dabei den elektrischen Antrieb als Synchronmotor auszubilden. Da bei solchen Motoren die Drehzahl abhängig ist von der Frequenz, aber unabhängig von der Belastung, ist eine drehzahlstabile Ansteuerung für die Werkzeugscheibe bzw. den Werkzeugträger möglich, unabhängig davon, wie viele Bearbeitungswerkzeuge an dem Träger angeordnet sind und unabhängig von deren Gewicht oder der jeweiligen Bearbeitungssituation. Da der erfindungsgemäße Werkzeugrevolver ohne Übertragungsgetriebe auskommt, läßt sich das Antriebskonzept insgesamt relativ steif auslegen, was der Bearbeitungsgenauigkeit zugute kommt. Obwohl das gesamte Antriebskonzept im wesentlichen integraler Bestandteil der Werkzeugscheibe ist, kommt es daher nicht zu ungewollten Schwingungen oder Vibrationen, was die Bearbeitungsgenauigkeit ungewollt beeinträchtigen könnte.

Bei einer bevorzugten Ausführungsform des erfindungsgemäßen Werkzeugrevolvers weist der Rotor mit seinem Außenumfang von der Längsachse des Revolvers einen radialen Abstand auf, der größer als die Hälfte des jeweiligen Abstandes eines Außenumfangsabschnittes des Werkzeugträgers von dieser Längsachse ist. Vorzugsweise ist dabei der Stator im Bereich des freien Endes des säulenartigen Gehäuseteils angeordnet, das sich in Richtung des Werkzeugträgers stufenartig erweitert bis zu einem Durchmesser, der größer ist als ein Grundgehäuseteil, über das der Werkzeugträger an dem Gehäuse des Werkzeugrevolvers gelagert ist.
Im Hinblick auf diese Maßnahmen ist der Einsatz eines im Durchmesser groß aufbauenden Elektromotors mit einer Vielzahl an Rotor- und Statorwicklungen möglich, so daß sich dergestalt ein hohes Maß an Leistung und Drehmoment für den Antrieb des Werkzeugträgers erreichen läßt.

Bei einer besonders bevorzugten Ausführungsform des erfindungsgemäßen Werkzeugrevolvers ist zwischen Werkzeugträger und dem Gehäuse eine Arretiereinrichtung vorgesehen. Vorzugsweise ist dabei die Arretiereinrichtung aus einer Bremse, insbesondere einer Lamellenbremse, oder aus einer Kupplung, insbesondere einer Zahnkupplung (Hirth-Verzahnung), gebildet. Mit einer dahingehenden Arretiereinrichtung ist es möglich, den Werkzeugträger nach seinem Verschwenken definitiv in einer Bearbeitungsstellung festzulegen und die bei der Bearbeitung mit den Bearbeitungswerkzeugen auftretenden Kräfte brauchen dann nicht wie bei der bekannten Lösung nach der DE 199 19 553 C2 von dem relativ leistungsschwachen elektrischen Antrieb aufgenommen zu werden, sondern vielmehr ist aufgrund der Arretiereinrichtung der elektrische Antrieb völlig entlastet und die Krafteinleitung erfolgt über die genannte Arretiereinrichtung ausschließlich in das Gehäuse.

Da aufgrund des zur Verfügung stehenden Einbauraumes am Werkzeugträger der erfindungsgemäße Außenläufermotor wesentlich größer dimensioniert werden kann als der bekannte Innenläufermotor, steht somit aber auch eine höhere Antriebsleistung zur Verfügung, so daß in Abhängigkeit von der Bearbeitungssituation die elektrische Leistung des Außenläufermotors auch durchaus genügen kann, um sicher ohne Arretiereinrichtung die Bearbeitungskräfte aufnehmen zu können.

Sofern bei einer bevorzugten Ausführungsform des erfindungsgemäßen Werkzeugrevolvers die Arretiereinrichtung hydraulisch oder pneumatisch über eine Betätigungseinrichtung betätigbar ist, lassen sich über die dahingehende Betätigung sehr hohe Brems- oder Kupplungskräfte zur Verfügung stellen, so daß beliebig hohe Kräfte, die bei der Bearbeitung entstehen, über die Arretierungseinrichtung in das Gehäuse des Werkzeugrevolvers ableitbar sind, ohne daß es zu einem Versagen des Werkzeugrevolvers kommen kann.

Bei einer weiteren bevorzugten Ausführungsform des erfindungsgemäßen Werkzeugrevolvers ist der Stator über eine Kühleinrichtung kühlbar, insbesondere in Form einer Wasserkühlung, wobei die Kühlleitungen in einem Trägerteil als Teil des Gehäuses angeordnet sind. Aufgrund der dahingehenden Kühleinrichtung lassen sich sicher die Erwärmungen, die im Stator bei den ausgesprochen hohen Drehmomenten entstehen können, aufnehmen und nach außen hin ableiten, so daß es nicht zu Materialerwärmungen, weder im Gehäuse noch im Werkzeugträger, kommen kann, was gegebenenfalls die spielfreie und hoch präzise Bearbeitung mit den Werkzeugen beeinträchtigen könnte.

Bei einer weiteren bevorzugten Ausführungsform des erfindungsgemäßen Werkzeugrevolvers weist das Trägerteil eine Kanalführung auf, in der zumindest die Stromzufuhr für den elektrischen Antrieb verläuft. Somit läßt sich der Antrieb von der Innenseite des Gehäuses her platzsparend bestromen, wobei es auch denkbar ist, das Trägerteil im Gehäuse dergestalt auszubilden, daß von einem separaten Antriebsmotor antreibbare Wellen zum Werkzeugträger derart geführt werden können, daß auch antreibbare Bearbeitungswerkzeuge am Werkzeugträger einsetzbar sind. Ein dahingehendes Energieübertragungs- und Antriebskonzept ist in der DE 40 18 543 C1 und EP 0 302 998 A1 offenbart, wobei diese bekannte Lösung auf den erfindungsgemäßen Werkzeugrevolver übertragbar ist.

Bei einer weiteren bevorzugten Ausführungsform des erfindungsgemäßen Werkzeugrevolvers ist die jeweilige Position des schwenkbaren Werkzeugträgers gegenüber dem feststehenden Gehäuse über eine Sensoreinrichtung, insbesondere einen Winkelpositionsgeber, feststellbar. Vorzugsweise ist dabei am Trägerteil ein Lesekopf des Winkelpositionsgebers angeordnet, der als weiteres Teil ein Meßrad aufweist, das an einer Stirnseite des Werkzeugträgers angeordnet mit diesem schwenkbar ist. Auch die dahingehende Überwachungseinrichtung ist platzsparend innerhalb des Werkzeugträgers bzw. der Werkzeugscheibe angeordnet. Ferner ist es mit der dahingehenden Sensor- oder Überwachungseinrichtung möglich, über ein entsprechendes Steuerungskonzept den elektrischen Antrieb dergestalt anzusteuern, daß eine sichere Positionierung der Bearbeitungswerkzeuge für einen anstehenden Bearbeitungsschritt gewährleistet ist.

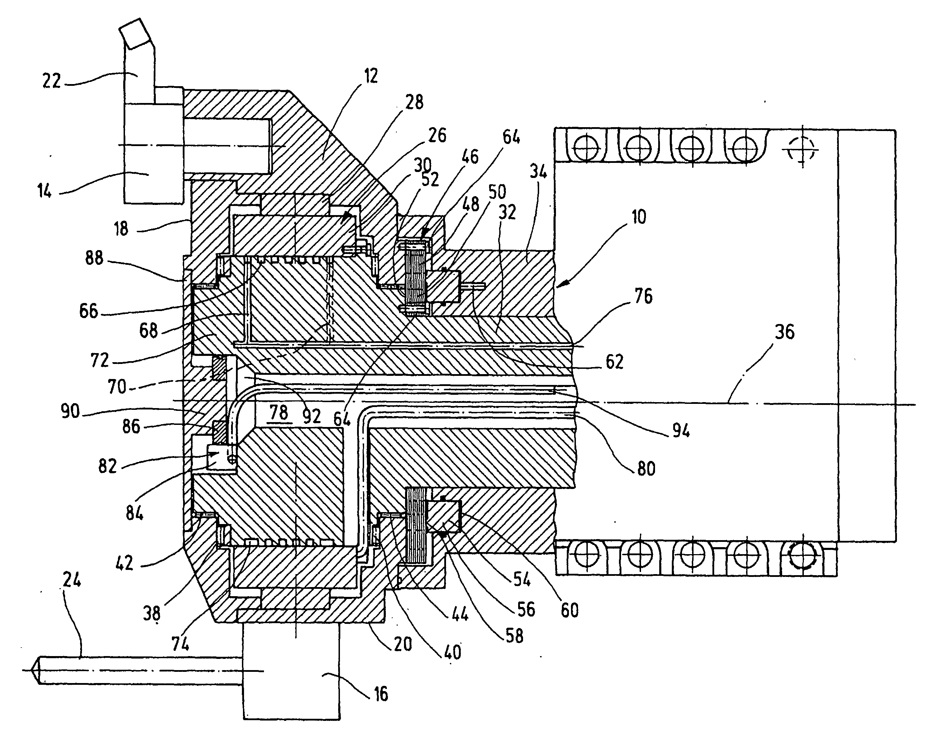

Im folgenden ist der erfindungsgemäße Werkzeugrevolver anhand einer Ausführungsform näher erläutert. Dabei zeigt die einzige Figur in prinzipieller und nicht maßstäblicher Darstellung teilweise im Schnitt, teilweise in Ansicht den Werkzeugrevolver mit Werkzeugträger und Revolvergehäuse.

Der in der Figur gezeigte Werkzeugrevolver weist ein als Ganzes mit 10 bezeichnetes Gehäuse auf zum Verbinden des Werkzeugrevolvers mit einer nicht näher dargestellten Werkzeugmaschine. Ferner weist der Werkzeugrevolver einen gegenüber dem Gehäuse 10 drehbar gelagerten Werkzeugträger 12 (Werkzeugscheibe) für die Aufnahme von Bearbeitungswerkzeugen 14,16 auf. Das Bearbeitungswerkzeug 14 ist in axialer Richtung an der Stirnseite 18 des Werkzeugrevolvers 12 angeordnet, wohingegen das Bearbeitungswerkzeug 16 an einem Radialumfang 20 des Werkzeugträgers 12 angeordnet ist. Das Bearbeitungswerkzeug 14 trägt eine Art Drehmeißel 22, wohingegen das Bearbeitungswerkzeug 16 über einen Bohrer 24 verfügt. Des weiteren weist der Werkzeugrevolver einen als Ganzes mit 26 bezeichneten elektrischen Antrieb auf. Dieser dient dazu, den Werkzeugträger 12 in die jeweilige Arbeitsstellung für die Bearbeitungswerkzeuge 14,16 zu verschwenken.

Der elektrische Antrieb 26 verfügt über einen Rotor 28 mit nicht näher dargestellten magnetischen Teilen, beispielsweise in Form von Permanentmagneten. Des weiteren weist er einen Stator 30 mit nicht näher dargestellten Spulenteilen in Form einer Vielzahl von Spulenwicklungen auf. Der Rotor 28 des elektrischen Antriebes 26 ist mit dem Werkzeugträger 12 fest verbunden; ebenso der Stator 30 mit Teilen 32 des Gehäuses 10. Wie sich des weiteren aus der Figur ergibt, umfaßt der scheibenartige Werkzeugträger 12 den Rotor 28, wobei darunterliegend unmittelbar der Stator 30 angeordnet ist. Der gesamte elektrische Antrieb 26 ist also innerhalb der Schwenkebene angeordnet und im Bereich des Werkzeugträgers 12 in diesen integriert. Dies führt zu einer kompakten Anordnung und aufgrund des verbreiterten Durchmessers des Werkzeugträgers 12 gegenüber den sonstigen Gehäuseteilen steht viel Platz für den Einbau des elektrischen Antriebes 26 zur Verfügung, der dergestalt gleichfalls im Durchmesser erweitert ausgestaltet werden kann, so daß eine Vielzahl von magnetischen Teilen und Spulenwicklungen vorgesehen sein kann. Dergestalt ist ein Außenläufermotor realisiert mit sehr hohen Leistungsdaten, insbesondere im Hinblick auf das abzugebende Drehmoment.

Das Gehäuse 10 weist ein Grundgehäuseteil 34 auf, in das dornartig das Gehäuseteil 32 eingreift, das an seinem in der Figur gezeigten freien Ende im Durchmesser stufenweise erweitert ist. Aufgrund dieser Erweiterung ist eine sichere Schwenkaufnahme erreicht für den um die Achse 36 schwenkbaren Werkzeugträger 12. Da es vorteilhaft ist, die bei der Bearbeitung entstehenden Kräfte am Werkzeugträger 12 möglichst nahe an der Bearbeitungsebene aufzufangen und in das Gehäuse 10 abzuleiten, sind die relevanten Lagerstellen für den Schwenkantrieb im Bereich der Erweiterung des Gehäuseteils 32 in Funktionsebenen zusammengefaßt angeordnet. So sind in der Zeichnung die Axiallager mit 38 und 40 bezeichnet und die zugehörigen Radiallager mit 42 und 44. Alle genannten Lager sind in der Art von Nadellagern ausgeführt und paarweise zu Gruppen 38,42 bzw. 40 und 44 an den stufenweisen Absatzstellen des sich erweiternden, säulenartigen Gehäuseteiles 32 angeordnet.

Des weiteren ist zwischen Werkzeugträger 12 und dem Gehäuse 10 eine als Ganzes mit 46 bezeichnete Arretiereinrichtung vorhanden. Diese Arretiereinrichtung 46 bildet eine Bremse aus in Form einer Lamellenbremse, wobei ein erstes Paket 48 an hintereinander angeordneten Lamellen über eine Schraubverbindung mit dem Werkzeugträger 12 fest verbunden ist. In die Abstände zwischen den Lamellen des ersten Paketes 48 greifen die korrespondierenden Lamellen eines zweiten Paketes 50 ein, wobei das zweite Paket 50 wiederum über eine Schraubverbindung fest mit der stirnseitigen Abschnittsstufe 52 des Gehäuseteils 32 fest verbunden ist. Die Abstände zwischen den Lamellen des ersten Paketes 48 und des zweiten Paketes 50 sind derart gewählt, daß im unbetätigten Zustand der Arretiereinrichtung 46 diese hemmfrei aneinander vorbeigleiten, sofern der Werkzeugrevolver 12 um die Achse 36 verschwenkt wird. Ist der Schwenkvorgang über den elektrischen Antrieb 26 abgeschlossen, ist also beispielsweise das Bearbeitungswerkzeug 16 an die Stelle des Bearbeitungswerkzeuges 14 und umgekehrt verschwenkt worden, läßt sich die Arretiereinrichtung 46 betätigen und die Lamellen des ersten und des zweiten Paketes 48 bzw. 50 werden derart aneinandergedrückt, daß die hierdurch entstehenden Reibkräfte ein so hohes Bremsmoment ausüben, daß die Bearbeitungskräfte, die bei der Bearbeitung mit dem jeweiligen Werkzeug 14 oder 16 entstehen, sicher über den Werkzeugträger 12 in das Gehäuseteil 32 und mithin in das Gehäuse 10 ableitbar sind. Letzteres ist wiederum fest verbunden mit der nicht näher dargestellten Aufnahme der Werkzeugmaschine.

Für das Ansteuern der Arretiereinrichtung 46 im Sinne der Bremskraftausübung ist eine hydraulische oder pneumatische Betätigungseinrichtung 54 vorgesehen. Die dahingehende Betätigungseinrichtung 54 weist einen Ringkolben 56 auf, der an seinem einen freien Ende einen Angriffsflansch 58 aufweist, mit dem sich die Lamellenpakete 48,50 zum Erzeugen einer Reibkraft zusammenpressen lassen. Demgemäß mündet das andere freie Ende des Ringkolbens 56 in einen Ringraum 60 im zylindrischen Grundgehäuseteil 34, wobei bei Beaufschlagung des Ringraumes 60 mit einem Medium über eine teilweise dargestellte Zuführleitung 62 der übliche hydraulische Druck jedenfalls ausreicht, um derart eine Betätigungskraft auf die Ringpakete 48,50 auszuüben. Wird der Ringraum 60 hingegen druckfrei gehalten, strömt also kein über die Zuführleitung 62 unter Druck stehendes Medium nach, sind die Lamellenpakete 48,50 freigegeben und die zunächst zusammengepreßten Einzellamellen werden beispielsweise durch die Schwenkbewegung des Werkzeugträgers 12 unterstützt in ihre ursprüngliche hemmfreie Lage rückgestellt. Da die Lamellen über Schrauben 64 an ihren freien Enden jeweils festgehalten werden, ergibt sich eine Art federnder Aufbau, der die Rückstellung der Lamellen in ihren Ausgangszustand mit sicherstellt, bei dem die Lamellenbremse freigegeben ist.

Anstelle der gezeigten Lamellenbremse könnte aber auch eine Kupplung eingesetzt werden, beispielsweise in Form einer dreigeteilten Hirth-Verzahnung (DE 3 817 893 A1 und EP 0 514 626 A1).

Mit dem dahingehenden Brems- oder Kupplungssystem ist sichergestellt, daß der Werkzeugträger 12 in seiner vorgegebenen Lage für eine Bearbeitung gehalten wird, wobei es dann nicht auf die mögliche Leistungsabgabe des Motors ankommt. Im Hinblick auf die hohe Leistungsausstattung für den elektrischen Antrieb 26 ist es jedoch auch möglich, auf die Arretiereinrichtung 46 zu verzichten und die auftretenden Bearbeitungskräfte ausschließlich über den elektrischen Antrieb 26 aufzunehmen.

Der Stator 30 mit seinen Spulenpaketen ist über eine Kühleinrichtung 66 kühlbar. Insbesondere ist hier eine Wasserkühlung denkbar oder eine solche mit einem entsprechenden Kühlschmiermittel, wobei die Kühlleitungen in Form eines Zulaufes 68 und eines Ablaufes 70 in dem Trägerteil 72 als Teil 32 des Gehäuses 10 angeordnet sind. In der abschnittsweisen Erweiterung des Gehäuseteils 32 sind hierfür außenumfangsseitig und in der Art einer Wendel miteinander verbundene Kühlabschnitte 74 vorgesehen, die vom Zulauf 68 das Kühlmittel erhalten und nach Durchlauf das erwärmte Kühlmittel an den Ablauf 70 abgeben, der in eine weitere Ablaufleitung mündet, die in Blickrichtung auf die Figur gesehen hinter der Zulaufleitung 76 und mithin nicht sichtbar zusammen mit der Zulaufleitung 76 längs der Achse 36 verläuft. Die dahingehende Zulaufleitung 76 und die Ablaufleitung sind dann an eine nicht näher dargestellte Versorgung an der Werkzeugmaschine angeschlossen.

Das Trägerteil 72 und mithin das Gehäuseteil 32 weist eine Kanalführung 78 auf, die sich parallel zur Längsachse 36 des Werkzeugrevolvers erstreckt und in der die Stromzufuhr 80 für den elektrischen Antrieb 26 verläuft. Insbesondere ist die Stromzufuhr 80 an die Spulenwicklungen des Stators 30 angeschlossen. Die dahingehende Kanalführung 78 könnte gemäß einer nicht näher dargestellten Ausführungsform des erfindungsgemäßen Werkzeugrevolvers auch um eine feststehende Hohlwelle ergänzt werden, über die dann die Antriebseinrichtungen verlaufen könnten, sofern man eine drehende Bearbeitung mit den Bearbeitungswerkzeugen wünscht. Eine dahingehende Energiesäule ist in der DE 40 18 543 C1 beschrieben, so daß an dieser Stelle hierauf nicht mehr näher eingegangen wird.

Die jeweilige Position des schwenkbaren Werkzeugträgers 12 gegenüber dem feststehenden Gehäuse 10 ist über eine als Ganzes mit 82 bezeichnete Sensoreinrichtung insbesondere in Form eines Winkelpositionsgebers feststellbar. Hierfür ist am Trägerteil 72 ein Lesekopf 84 des Winkelpositionsgebers angeordnet, der als weiteres Teil ein Meßrad 86 aufweist, das an einer Stirnplatte 88 des Werkzeugträgers 12 angeordnet und mit diesem schwenkbar ist. Für die dahingehende Aufnahme weist die Stirnplatte 88 an ihrer der Umgebung abgewandten Seite einen Mittenabsatz 90 auf, der sich koaxial zur Achse 36 erstreckt und in eine Ausnehmung 92 des Trägerteils 72 eingreift. Entlang des Außenumfanges des dahingehenden Mittenabsatzes 90 erstreckt sich dann das ringförmige Meßrad 86, wobei der Lesekopf 84 nur an einer Stelle den Abgriff vornehmen muß. Damit die Daten des dahingehenden Winkelpositionsgebers an eine Steuerung weiterleitbar sind, ist an den Lesekopf 84 eine Meß- oder Datenleitung 94 angeschlossen, die gleichfalls in der Kanalführung 78 des Trägerteils 72 bzw. des Gehäuseteils 32 geführt ist.

Mit dem erfindungsgemäßen Werkzeugrevolverkonzept ist der elektrische Außenläuferantrieb unmittelbar im Schwenkbereich des Werkzeugträgers 12 angeordnet, wobei der dahingehende elektrische Antrieb 26 sehr hohe Drehmomente aufbringen kann. Durch die Integration des elektrischen Antriebes 26 in den Drehbereich des Werkzeugträgers 12 bei gleichzeitiger Anordnung der relevanten Lagerstellen 38,40,42 und 44 in Richtung der Bearbeitungsebene ist ein spiel- und schlupffreier Bearbeitungsvorgang mit dem jeweiligen Werkzeug 14 oder 16 möglich. Durch die hydraulisch betätigbare Bremse in Form der Arretiereinrichtung 46 ist darüber hinaus sichergestellt, daß die bei der Bearbeitung entstehenden Kräfte sicher in das Gehäuse 10 ableitbar sind.

## Patentansprüche

1. Werkzeugrevolver mit
- einem mit einer Werkzeugmaschine zu verbindenden Gehäuse (10),
- einem drehbar gelagerten Werkzeugträger (12) für die Aufnahme von Bearbeitungswerkzeugen (14,16),
- und einem elektrischen Antrieb (26), um den Werkzeugträger (12) in die jeweilige Arbeitsstellung für die Bearbeitungswerkzeuge (14,16) zu verschwenken,
wobei der elektrische Antrieb (26) einen Rotor (28) und einen Stator (30) mit Spulenwicklungen aufweist,
wobei der Rotor (28) des elektrischen Antriebes (26) mit dem Werkzeugträger (12) in Verbindung steht und der Stator (30) mit Teilen (32) des Gehäuses (10),
wobei die Drehbewegung für den Werkzeugträger (12) getriebelos und direkt durch den elektrischen Antrieb (26) erfolgt und
wobei der Rotor (28) den Stator (30) umfaßt,
**dadurch gekennzeichnet, daß** sowohl der Rotor (28) als auch der Stator (30) von dem Werkzeugträger (12) umgriffen sind und daß der Rotor (28) außenumfangsseitig in direkter Anlage mit dem Werkzeugträger (12) ist und dergestalt zur Übertragung eines Drehmomentes mit dem Werkzeugträger (12) fest verbunden ist.

2. Werkzeugrevolver nach Anspruch 1, **dadurch gekennzeichnet, daß** der Rotor (28) mit seinem Außenumfang von der Längsachse (36) des Revolvers einen radialen Abstand aufweist, der größer als die Hälfte des jeweiligen Abstandes eines Außenumfangsabschnittes des Werkzeugträgers (12) von dieser Längsachse (36) ist.

3. Werkzeugrevolver nach Anspruch 1 oder 2, **dadurch gekennzeichnet, daß** der Stator (30) im Bereich des freien Endes des säulenartigen Gehäuseteiles (32) angeordnet ist, das sich in Richtung des Werkzeugträgers (12) stufenartig erweitert bis zu einem Durchmesser, der größer ist als ein Grundgehäuseteil (34), über das der Werkzeugträger (12) an dem Gehäuse (10) des Werkzeugrevolvers gelagert ist.

4. Werkzeugrevolver nach Anspruch 3, **dadurch gekennzeichnet, daß** am Übergang zwischen Werkzeugträger (12) zu dem Grundgehäuseteil (34) eine Arretiereinrichtung (46) angeordnet ist.

5. Werkzeugrevolver nach Anspruch 4, **dadurch gekennzeichnet, daß** der Außendurchmesser der Arretiereinrichtung (46) kleiner ist als der Außendurchmesser des Stators (30).

6. Werkzeugrevolver nach Anspruch 4 oder 5, **dadurch gekennzeichnet, daß** die Arretiereinrichtung (46) auf der der Stirnseite des Werkzeugträgers (12) abgewandten Seite dem Gehäuse (10) zugewandt angeordnet ist.

7. Werkzeugrevolver nach einem der Ansprüche 1 bis 6, **dadurch gekennzeichnet, daß** der elektrische Antrieb (26) als Asynchron- oder Synchronmotor ausgebildet ist.

8. Werkzeugrevolver nach einem der Ansprüche 4 bis 7, **dadurch gekennzeichnet, daß** die Arretiereinrichtung (46) aus einer Bremse, insbesondere einer Lamellenbremse (48,50) oder aus einer Kupplung, insbesondere aus einer Zahnkupplung (Hirth-Verzahnung) gebildet ist.

9. Werkzeugrevolver nach einem der Ansprüche 4 bis 8, **dadurch gekennzeichnet, daß** die Arretiereinrichtung (46) hydraulisch oder pneumatisch über eine Betätigungseinrichtung (54) ansteuerbar ist.

10. Werkzeugrevolver nach einem der Ansprüche 1 bis 9, **dadurch gekennzeichnet, daß** der Stator (30) über eine Kühleinrichtung (66) kühlbar ist, insbesondere in Form einer Wasserkühlung, und daß die Kühlleitungen (68,70,74,76) in einem Trägerteil (72) als Teil (32) des Gehäuses (10) angeordnet sind.

11. Werkzeugrevolver nach Anspruch 10, **dadurch gekennzeichnet, daß** das Trägerteil (72) eine Kanalführung (78) aufweist, in der zumindest die Stromzufuhr (80) für den elektrischen Antrieb (26) verläuft.

12. Werkzeugrevolver nach einem der Ansprüche 1 bis 11, **dadurch gekennzeichnet, daß** die jeweilige Position des schwenkbaren Werkzeugträgers (12) gegenüber dem feststehenden Gehäuse (10) über eine Sensoreinrichtung (82), insbesondere einen Winkelpositionsgeber, feststellbar ist.

13. Werkzeugrevolver nach Anspruch 12, **dadurch gekennzeichnet, daß** zwischen dem Trägerteil (72) und der Stirnplatte (88) des Werkzeugträgers (12) ein Hohlwellendrehgeber angeordnet ist.

14. Werkzeugrevolver nach einem der Ansprüche 1 bis 13, **dadurch gekennzeichnet, daß** die Werkzeugscheibe (12) feststehende oder rotierende Bearbeitungswerkzeuge (14,16) an ihrem Radialumfang (20) oder an ihrer Stirnseite (18) aufnimmt.

## Claims

1. Turret with
. a housing (10) connectable to a machine tool,
. a rotatably mounted tool carrier (12) for holding the machining tools (14, 16),
. and an electrical drive (26) for swinging the tool carrier (12) into the respective working position for the machining tools (14, 16),
whereby the electrical drive (26) has a rotor (28) and a stator (30) with coil windings,
whereby the rotor (28) of the electrical drive (26) is connected to the tool carrier (12) and the stator (30) to parts (32) of the housing (10),
whereby the rotary movement for the tool carrier (12) is performed without gears and direct by the electrical drive (26) and
whereby the rotor (28) comprises the stator (30),
**characterised in that** the rotor (28) as well as the stator (30) are encompassed by the tool carrier (12) and **in that** the rotor (28) is in direct contact with the tool carrier (12) on the outer periphery being thus firmly connected to the tool carrier (12) for the purpose of transmitting the torque.

2. Turret according to Claim 1, **characterised in that** the outer periphery of the rotor (28) is radially spaced from the longitudinal axis (36) of the turret at a distance which is greater than half the respective distance of a section of the outer periphery of the tool carrier (12) from this longitudinal axis (36).

3. Turret according to Claim 1 or 2, **characterised in that** the stator (30) is arranged in the area of the free end of the column-type housing part (32) which is enlarged in the direction of the tool carrier (12) in steps up to a diameter which is larger than a housing part (34) over which the tool carrier (12) is mounted at the housing (10) of the turret.

4. Turret according to Claim 3, **characterised in that** a locking device (46) is arranged at the transition from the tool carrier (12) to the base housing part (34).

5. Turret according to Claim 4, **characterised in that** the outside diameter of the locking device (46) is smaller than the outside diameter of the stator (30).

6. Turret according to Claim 4 or 5, **characterised in that** the locking device (46) is arranged on the end face facing away from the tool carrier (12), facing the housing (10).

7. Turret according to one of the Claims 1 to 6, **characterised in that** the electrical drive (26) is designed as an asynchronous or a synchronous motor.

8. Turret according to one of the Claims 4 to 7, **characterised in that** the locking device (46) is formed by a brake, especially a multi-plate brake (48, 50) or a clutch, especially a toothed clutch (Hirth gears).

9. Turret according to one of the Claims 4 to 8, **characterised in that** the locking device (46) is controlled hydraulically or pneumatically by means of an operating device (54).

10. Turret according to one of the Claims 1 to 9, **characterised in that** the stator (30) can be cooled by means of a cooling device (66), especially in the form of a water cooling system and **in that** the cooling lines (68, 70, 74, 76) are arranged in a carrier part (72) designed as a part (32) of the housing (10).

11. Turret according to Claim 10, **characterised in that** the carrier part (72) has a duct (78) in which at least the power supply for the electrical drive (26) is laid.

12. Turret according to one of the Claims 1 to 11, **characterised in that** any given position of the rotatable tool carrier (12) in relation to the fixed housing (10) can be determined via a sensor device (82), especially an angle setting pick-up.

13. Turret according to Claim 12, **characterised in that** a tubular shaft rotation pick-up is arranged between the carrier part (72) and the face plate (88) of the tool carrier (12).

14. Turret according to one of the Claims 1 to 13, **characterised in that** the tool mounting plate (12) is designed to hold fixed or rotating machining tools (14, 16) on its radial periphery (20) or its end face (18).

## Revendications

1. Porte-outils revolver avec
- un boîtier (10) à relier à une machine-outil,
- un porte-outils monté de manière pivotante (12) pour recevoir des outils d'usinage (14, 16),
- et un moteur électrique (26) pour faire pivoter le porte-outil (12) dans la position respective de travail des outils d'usinage (14, 16),
sachant que le moteur électrique (26) comporte un rotor (28) et un stator (30) avec des enroulements à bobines,
sachant que le rotor (28) du moteur électrique (26) est relié au porte-outils (12) et que le stator (30) est relié à des pièces (32) du boîtier (10),
sachant que le mouvement de rotation est à entraînement direct pour le porte-outils (12) et est effectué directement par le moteur électrique (26) et
sachant que le rotor (28) comprend le stator (30),
**caractérisé en ce que** le rotor (28) aussi bien que le stator (30) sont entourés par le porte-outils (12) et **en ce que** le rotor (28) est positionné directement sur le côté extérieur du porte-outil (12) et par voie de conséquence est relié solidement au porte-outils (12) pour la transmission d'un moment de torsion.

2. Porte-outils revolver selon la revendication 1, **caractérisé en ce que** le rotor (28) comporte un écart radial par rapport à son domaine extérieur, à partir de l'axe longitudinal (36) du revolver, écart qui est supérieur à la moitié de l'écart respectif d'un segment de domaine extérieur du porte-outils (12) à partir de cet axe longitudinal (36).

3. Porte-outils revolver selon la revendication 1 ou 2, **caractérisé en ce que** le stator (30) est disposé au niveau de l'extrémité libre de la pièce de boîtier à la manière d'une colonne (32), qui s'étend graduellement dans le sens du porte-outils (12) jusqu'à un diamètre qui est plus grand qu'une pièce du boîtier de base (34) sur laquelle le porte-outils (12) est logé contre le boîtier (10) du porte-outils revolver.

4. Porte-outils revolver selon la revendication 3, **caractérisé en ce qu'**un dispositif d'arrêt (46) est disposé à la jonction entre le porte-outils (12) et la pièce de boîtier de base (34).

5. Porte-outils revolver selon la revendication 4, **caractérisé en ce que** le diamètre extérieur du dispositif d'arrêt (46) est plus petit que le diamètre extérieur du stator (30).

6. Porte-outils revolver selon la revendication 4 ou 5, **caractérisé en ce que** le dispositif d'arrêt (46) sur le côté orienté vers la face avant du porte-outils (12) est disposé tourné vers le boîtier (10).

7. Porte-outils revolver selon l'une des revendications 1 à 6, **caractérisé en ce que** le moteur électrique (26) est configuré comme un moteur asynchrone ou synchrone.

8. Porte-outils revolver selon l'une des revendications 4 à 7, **caractérisé en ce que** le dispositif d'arrêt (46) est formé d'un frein, en particulier d'un frein à disques multiples (48, 50) ou d'un accouplement, en particulier d'un accouplement à dents (crantage Hirth).

9. Porte-outils revolver selon l'une des revendications 4 à 8, **caractérisé en ce que** le dispositif d'arrêt (46) peut être dirigé hydrauliquement ou pneumatiquement par l'intermédiaire d'un dispositif d'actionnement (54).

10. Porte-outils revolver selon l'une des revendications 1 à 9, **caractérisé en ce que** le stator (30) peut être refroidi par un dispositif de refroidissement (66), en particulier sous la forme d'un refroidissement par eau et **en ce que** les tuyaux de refroidissement (68, 70, 74, 76) sont disposés dans un élément du support (72) comme élément (32) du boîtier (10).

11. Porte-outils revolver selon la revendication 10, **caractérisé en ce que** l'élément du support (72) comporte une canalisation (78), dans laquelle passe au moins le courant (80) pour le moteur électrique (26).

12. Porte-outils revolver selon l'une des revendications 1 à 11, **caractérisé en ce que** la position respective du porte-outils pivotant (12) peut être déterminée par rapport au boîtier fixe (10) par l'intermédiaire d'un organe détecteur (82), en particulier un transmetteur de position angulaire.

13. Porte-outils revolver selon la revendication 12, **caractérisé en ce qu'**un détecteur rotatif d'axe creux est disposé entre l'élément du support (72) et la tôle d'avant (88) du porte-outils (12).

14. Porte-outils revolver selon l'une des revendications 1 à 13, **caractérisé en ce que** le disque de l'outil (12) reçoit des outils d'usinage fixes ou rotatifs (14, 16) dans sa zone radiale (20) ou sur sa face avant (18).
